# EUROPEAN PATENT SPECIFICATION

(11) **EP 4 082 313 B1**
(45) Date of publication and mention of the grant of the patent: **23.09.2026**
(21) Application number: 22170834.0
(22) Date of filing: 29.04.2022
(51) Int. Cl.: A01B 59/043, A01B 63/111, A01B 59/041, A01B 61/02

(54) **AGRICULTURAL VEHICLE COMPRISING A LIFTING ASSEMBLY AND RELATED TORQUE CONTROL METHOD**
LANDWIRTSCHAFTLICHES FAHRZEUG MIT EINER HEBEVORRICHTUNG UND ENTSPRECHENDES DREHMOMENTSTEUERUNGSVERFAHREN
VÉHICULE AGRICOLE COMPORTANT UN ENSEMBLE DE LEVAGE ET PROCÉDÉ DE COMMANDE DE COUPLE ASSOCIÉ

(30) Priority: 29.04.2021 IT 202100010847
(43) Date of publication of application: 02.11.2022
(73) Proprietor: CNH Industrial Italia S.p.A., 10156 Torino (IT)
(72) Inventor: Huber, Karl, 4100 Ottensheim (AT); HUBER, Roland, 4391 Waldhausen (AT); KOECK, Reinhard, 4360 Grein (AT)
(74) Representative: CNH Industrial IP Department

(56) References cited:
- EP-B1- 3 300 557
- DE-A1- 10 120 733
- DE-A1- 3 230 330

## Description

### TECHNICAL FIELD

The present invention concerns a lifting assembly, in particular a torque control method for a lifting assembly for an agricultural vehicle.

The present invention finds its preferred, although not exclusive, application in rear lifting system for a tractor.

### BACKGROUND OF THE INVENTION

Agricultural vehicle such as tractors usually comprises lifting systems configured to allow the connection of the tractor to a trailer or to implements to provide different work operations.

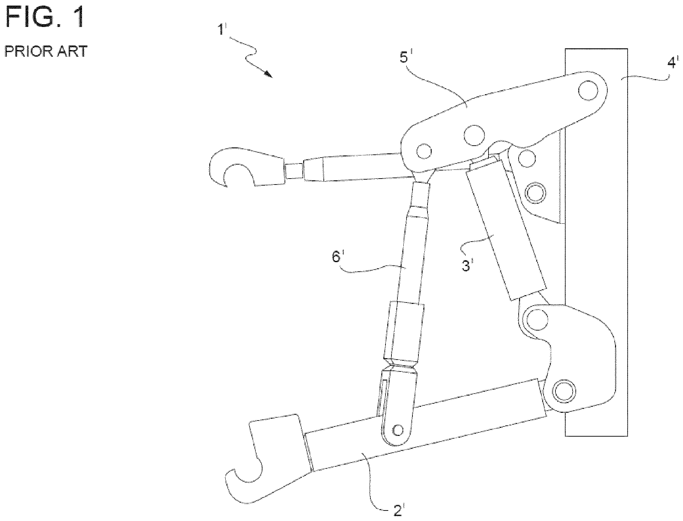

In particular, making reference to figure 1, known prior art lifting system 1' usually comprises a pair of arms 2' carried by a lifting cylinder 3' that is interposed between tractor's body 4' and a rocker element 5'. The rocker element 5' extends transversally over the tractor's body 4' to joint together the two arms 2' to compensate torque acting between these latter. The two arms are furthermore connected to the rocker element 5' via guide rods 6'.

It is evident that the above defined configuration leads to encumbrance problems, namely:
- The presence of guide rods 6' limits the useful space above the arms 2';
- The presence of rockers 5' limits the useful space above tractor's body 4'.

Moreover, it is clear that the presence of guide rods 6' and rockers 5' increases the weight of the lifting system 1', its complexity and its manufacturing costs.
Document DE3230330 A1 discloses a tractor pulling a plough by means of a rear power-lift, wherein links of the powerlift are connected to the tractor body by means of resilient elements. A potentiometer is associated to the resilient element, to detect the force acting on the plough, and the hydraulic system of the rear power-lift is actuated to maintain constant the resistance applied by the plough on the tractor.

Document DE10120733 A1 discloses a hexapod hitch system for an agricultural vehicle comprising six hydraulically actuating connecting element carried by the vehicle and configured to support a work attachment.

Document EP3300557 B1 discloses a work vehicle provided with a rear power-lift for carrying a plough. In addition, document EP3300557 B1 discloses a method for operating such work vehicle which envisage to determine the force acting on the plough, to compare such force with a predetermined value, and to activate the hydraulic actuation unit of the power-lift to raise or lower the power-lift if the measured force deviates from the predetermined value.

Therefore, the need is felt to provide a lifting system that has reduced encumbrances while maintaining the same functionalities.

An aim of the present invention is to satisfy the above mentioned needs in an optimized and cost effective way.

### SUMMARY OF THE INVENTION

The aforementioned aim is reached by a vehicle and a related control method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematized lateral view of a lifting system as known in prior art;
- Figure 2 is a schematic perspective view of the lifting system according to the invention;
- Figure 3 is a schematic lateral view of the lifting system of figure 2 in a first operational condition; and
- Figure 4 is a schematic lateral view of the lifting system of figure 2 in a second operational condition.

### DETAILED DESCRIPTION OF THE INVENTION

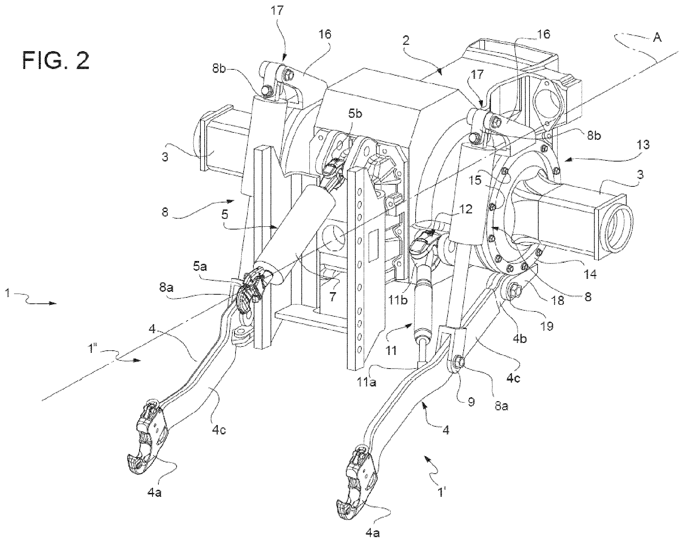

Figure 2 discloses a lifting system 1 for an agricultural vehicle, e.g. a tractor. The lifting system 1 comprises a right portion 1' and a left portion 1" with respect to a longitudinal axis A of the vehicle.

The vehicle is shown only in a portion 2 of the vehicle's body and comprising a portion of axle support 3, namely a right and a left axle supports, that both extends transversally with respect to longitudinal axis A and concentric one with respect to the other.

The lifting system 1 comprises a pair of lateral connecting arms 4, one for each between right portion 1' and left portion 1", and a central connecting arm 5.

Both the lateral connecting arms 4 and the central connecting arm 5 defines a terminal connection portion 4a, 5a suitable for being connected to an element to be coupled with the agricultural vehicle.

Accordingly, the terminal connection portions 4a, 5a are placed on opposite side on the respective arm with respect to tractor's body 2 and are, exemplarily, shaped as a hook.

The terminal coupling portions 5b of the central arm 5, opposite to the terminal connection portion 5a is carried by portion 2 via a movable connection 6 such as a hinge. The central arm 5 is provided with adjusting means 7, e.g. a hydraulic top link, configured to vary the length between terminal portions 5a, 5b.

The lateral arms 4 are each connected to the body portion 2, as described in the following, via a terminal coupling portion 4b opposite to the terminal connection portion 4a. Advantageously, the central portion 4c of each arm 4 is made of a rigid element, such as a metal bar, having a predefined cross-section; in the disclosed embodiment each arm is represented by a metal bar having a rectangular cross-section.

The lateral arms 4 are each further connected to the portion 2 via actuator means 8 comprising a lower extremity 8a connected to the central portion 4c of the lateral arm 4 and an upper extremity 8b connected to the body portion 2 as described in the following.

In particular, the lower extremity 8b is coupled to the central portion 4c via a hinge 9 configured to allow the rotation of central portion 4c about an axis transversal to axis A, preferably perpendicular to this latter.

The lateral arms 4 are each further connected to the portion 2 via stabilizer means 11 comprising an outer extremity 11a connected to the central portion 4c of the lateral arm 4 and an inner extremity 11b connected to the body portion 2. In particular, both the inner and outer extremities 11a, 11b are connected to the respective element via movable connections such as a hinge connection 12.

Preferably, stabilizer means 11 are connected to central portion 4c between the connection of lower extremity 8a with this latter and the terminal connection portion 4a.

Clearly, stabilizer means 11 may be realized as hydraulic dampers placed in a lower portion of the body 2 and inclined with respect to axis A or via equivalent mechanical links. Furthermore, they may be disposed differently with respect to the shown disposition.

Advantageously, the coupling terminal portions 4b of each arm 4 and the upper extremity 8b of each actuator 8 may be connected to a support structure 13 that can be selectively fixed to the body portion 2.

In particular, support structure 13 comprises a ring 14 that may be housed about axle support 3 via a selective fixing connection such as a threaded connection. Accordingly, a plurality of threaded elements 15 may be used for fixing the support structure 13 to the body 2 about the axle support 3.

The upper portion 8b of actuator 8 is connected to support structure 3 via an upper cantilevered portion 16. The upper cantilevered portion 16 is advantageously fixedly carried by support structure 13 and preferably realized as one piece with the latter. The upper portion 8b is carried by upper cantilevered portion 16 in a movable manner, e.g. via a hinge connection 17. The hinge connection 17 is advantageously realized to allow the rotation of actuator about two axis that are transversal with respect to axis A.

The coupling terminal portion 4b of lateral arm 4 is connected to support structure 3 via a lower cantilevered portion 18. The lower cantilevered portion 18 is advantageously fixedly carried by support structure 13 and preferably realized as one piece with the latter. The upper portion 8b is carried by lower cantilevered portion 16 in a movable manner, e.g. via a hinge connection 19. The hinge connection 19 is advantageously realized as a spherical joint.

As shown the upper and lower cantilevered portions 16, 18 are placed vertically opposite on support structure 13 with respect axle support 3.

The actuator 8 and the stabilizer means 11 are, as said, hydraulic cylinders that are controlled by a hydraulic circuit that may be design of any typology according to the necessity of the vehicle.

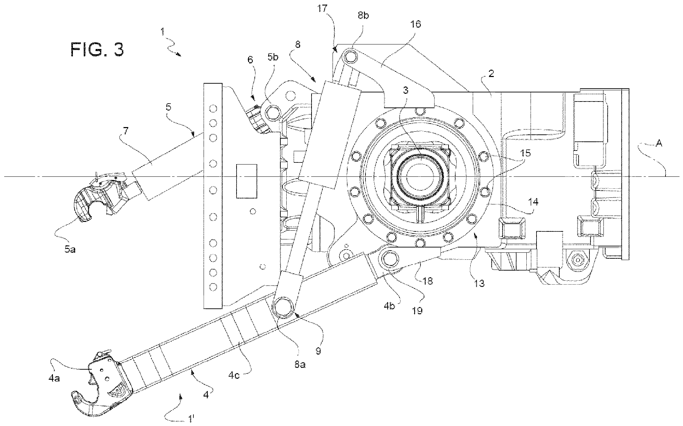

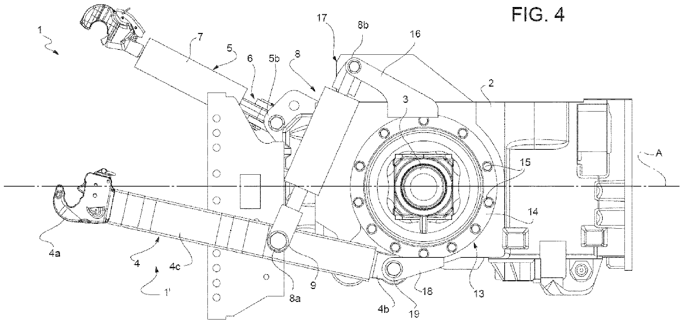

In particular, actuators 8 are controlled to extend or retract (see figures 3 and 4) to low or rise the respective lateral arm 4, i.e. to vary their inclination with respect to longitudinal axis A in a vertical plane.

Similarly, stabilizer means 11 are adjusted, manually or automatically, to extend or retract to space out or near together between themselves the lateral arm 4, i.e. to vary their inclination with respect to longitudinal axis A in a horizontal plane.

The control of extension or retraction of actuators 8 is achieved via a central control unit of the work vehicle (not shown) that receives input on the necessary position of lateral arms 4 and that varies accordingly the actuation of actuators 8.

The lifting assembly 1 is furthermore provided with sensor means (not shown) configured to detect operational parameters related to the torque acting on lateral arms 4 with respect to body 2.

Advantageously, such sensor means may comprise torque means, e.g. placed integrated in hinge 19, and configured to detect an inward or outward torque acting on lateral arm 3 and/or position means, e.g. angular position means, configured to detect the position of the terminal connection portion 4a of the lateral arm 4.

The control unit is configured to be electronically connected, e.g. via cables or wireless, to the aforementioned sensor means and to acquire the data detected by this latter to control the operation of actuator means 8.

Advantageously, the tractor may be provided with signaling means (not shown) configured to signal a condition of danger when said detected value is higher with respect to the threshold value.

In such case, the signaling means may comprise visual and/or sonic means configured to emit light or sounds to warn the driver if a dangerous condition is reached.

The operation of the above described lifting assembly 1 according to the invention is the following.

The unit may control the lifting or lowering of the lateral arms via actuator means 8. Indeed, the hydraulic circuit will impart an oil flow configured to retract or extend the hydraulic cylinder thereby lowering or lifting the lateral arm 4. Accordingly, the terminal connection portion 4a will move about a circumference having a radius equal to the length along axis A of lateral arm 4 and centered on hinge 4b.

Therefore, the lateral arm 4 may be lifted or lowered to allow the connection with a specific implement to be trailed by the tractor.

In particular, when the lateral arms 4 are connected to the respective implement that is trailed by the tractor, the sensor means may continuously, alternatively at preset interval time, detect the torque and/or angular position of the lateral arms 4.

Such detected value is acquired by the control unit and compared with a threshold torque and/or angular position of lateral arms 4 that is considered as maximum allowed torque and/or angular position for a safe operation of lateral arm 4, i.e. to avoid undesired failures. Such threshold value may be memorized in the control unit and derived from experimental values that are specific with respect to the geometry of the lifting system 1.

If such detected value is lower with respect to such threshold value, no action is carried out.

If such detected value is higher with respect to such threshold value, the control unit provides corrective actions. In particular, control unit may control actuator means 8 stabilizer means 11 to vary the position of the lateral arms 4 thereby reducing the torque acting on these latter.

Thanks to the above defined lift assembly, it is possible to provide a method for limiting the torque acting between the lateral arms 4 and the tractors' body 2 comprising the followings steps:
- Detecting a value representing a torque acting between the lateral arms 4 and the tractor's body 2;
- Comparing such detected value with a memorized value;
- If such detected value is lower with respect to such memorized value, no actions are carried out;
- If such detected value is higher with respect to such memorized value, corrective actions are carried out.

In particular, the corrective actions may comprise a variation of position of the lateral arms 4.

Furthermore, the method may further comprise a signalization step wherein, if such detected value is higher with respect to such memorized value, signaling means are activated to warn the driver.

In view of the foregoing, the advantages of a vehicle and a related method according to the invention are apparent.

The proposed system is lighter and comprises less elements with respect to known systems. In particular, guide rods and rockers that are usually used in known lifting systems are avoided.

Accordingly, the proposed system is more compact and economic.

Moreover, thanks to support structure 13 that can be selectively fixed to the body portion 2 of the tractor, this latter can be equipped of the lifting assembly only when needed.

Moreover, it is possible to use the same lifting assembly 1 on different tractors' body simply coupling the support structure 13 to the body portion on the latter, provided that a specific coupling portion is provided. In this way, there is a clear economic advantage for scale economy in production of the lifting assembly 1.

Moreover, it is clear that left and right lifting portions are therefore independent one with respect to the other.

Furthermore, the provided systems allows to avoid undesired failures in the lifting assembly due to the continuous monitoring of values related to the torque acting between lateral arms 4 and body portion 2. Indeed, such torque is supported by rockers in known system, that are absent in the present lifting assembly.

It is clear that modifications can be made to the described vehicle and method which do not extend beyond the scope of protection defined by the claims.

For example, the shape of the elements comprised by the lifting assembly 1 may be varied according to the vehicle necessities.

Moreover, the signaling means may be present or absent, such as stabilizer means 11 that may be substituted by equivalent mechanical or hydraulic structures.

## Claims

1. Work vehicle comprising a lifting system (1) provided with:
- a pair of lateral arms (4) defining a connection portion (4a) configured for allowing the connection of the lateral arm (4) to an element carried by the work vehicle and a coupling portion (4b) opposite to the connection portion (4a) and configured to allow a movable connection of the lateral arm (4) with respect to a body portion (29) of the work vehicle,
- actuator means (8) for actuating each of said pair of lateral arms (4) and comprising a lower portion (8a) connected between the connection and coupling portions (4a, 4b) and an upper portion (8b) connected to said body portion (2);
wherein said lower portion (8a) and said upper portion (8b) are connected to the respective element via movable connections (9, 17), said actuator means (8) being configured to increase or decrease their dimension to lift or lower said connection portion (4a) with respect to ground,
wherein said upper portion (8b) of said actuator means (8) and said coupling portion (4b) of said lateral arms (4) are both connected to a same support element (13) that is carried by body portion (2),
said work vehicle (1) being provided with sensor means configured to detect a operational parameters related to the torque acting on said lateral arms (4) with respect to said body portion (2),
said work vehicle (1) being provided with a control unit configured to receive the data transmitted by said sensor means and control said actuator means (8) to maintain said torque acting on said lateral arms (4) with respect to said body portion (2) below a predetermined threshold value
**characterised in that**
the support element (13) is a ring 14 that may be housed about an axle support (3) via a selective fixing connection.

2. Work vehicle according to claim 1, wherein said sensor means comprise position sensors carried by said lateral arms (4).

3. Work vehicle according to claim 1 or 2, wherein said sensor means comprise torque sensors.

4. Work vehicle according to claim 3, wherein said torque sensor means are integrated into said movable connections (9, 17).

5. Work vehicle according to any of said preceding claims, wherein said work vehicle is provided with signaling means, said control unit being configured to control the activation of said signaling means to emit a warning signal if said detected torque is greater than said predetermined threshold value.

6. Work vehicle according to claim 5, wherein said signaling means comprise audio and/or sound signaling means.

7. method for limiting the torque acting in a work vehicle provided with a lifting assembly (1) according to any of the preceding claims, such method comprising the followings steps:
• Detecting a value representing a torque acting between the lateral arms (4) and the tractor's body (2);
• Comparing such detected value with a memorized value in said control unit;
• If such detected value is lower with respect to such memorized value, no actions are carried out;
• If such detected value is higher with respect to such memorized value, corrective actions are carried out.

8. Method according to claim 7, wherein said corrective actions may comprise a variation of position of the lateral arms (4).

9. Method according to claim 7 or 8, further comprising a signalization step wherein, if such detected value is higher with respect to such memorized value, signaling means are activated to warn the driver.

## Patentansprüche

1. Arbeitsfahrzeug, umfassend ein Hubsystem (1), das versehen ist mit:
- ein Paar Seitenarme (4), die einen Verbindungsabschnitt (4a), der konfiguriert ist, um die Verbindung des Seitenarms (4) mit einem von dem Arbeitsfahrzeug getragenen Element zu ermöglichen, und einen Kopplungsabschnitt (4b) definieren, der dem Verbindungsabschnitt (4a) gegenüberliegt und konfiguriert ist, um eine bewegliche Verbindung des Seitenarms (4) in Bezug auf einen Körperabschnitt (29) des Arbeitsfahrzeugs zu ermöglichen,
- Betätigungsmittel (8) zum Betätigen jedes des Paares von Seitenarmen (4) und umfassend einen unteren Abschnitt (8a), der zwischen den Verbindungs- und Kopplungsabschnitten (4a, 4b) verbunden ist, und einen oberen Abschnitt (8b), der mit dem Körperabschnitt (2) verbunden ist;
wobei der untere Abschnitt (8a) und der obere Abschnitt (8b) über bewegliche Verbindungen (9, 17) mit dem jeweiligen Element verbunden sind, wobei die Betätigungsmittel (8) konfiguriert sind, um ihre Abmessung zu vergrößern oder zu verkleinern, um den Verbindungsabschnitt (4a) in Bezug auf den Boden anzuheben oder abzusenken,
wobei der obere Abschnitt (8b) der Betätigungsmittel (8) und der Kopplungsabschnitt (4b) der Seitenarme (4) beide mit demselben Stützelement (13) verbunden sind, das von dem Körperabschnitt (2) getragen wird,
wobei das Arbeitsfahrzeug (1) mit Sensormitteln versehen ist, die konfiguriert sind, um Betriebsparameter zu erfassen, die sich auf das Drehmoment beziehen, das auf die Seitenarme (4) in Bezug auf den Körperabschnitt (2) wirkt,
wobei das Arbeitsfahrzeug (1) mit einer Steuereinheit versehen ist, die konfiguriert ist, um die von den Sensormitteln übertragenen Daten zu empfangen und die Betätigungsmittel (8) zu steuern, um das Drehmoment, das auf die Seitenarme (4) in Bezug auf den Körperabschnitt (2) wirkt, unter einem vorbestimmten Schwellenwert zu halten
**dadurch gekennzeichnet, dass**
das Stützelement (13) ein Ring 14 ist, der über eine selektive, fixierende Verbindung um eine Achsaufnahme (3) untergebracht werden kann.

2. Arbeitsfahrzeug nach Anspruch 1, wobei die Sensormittel von den Seitenarmen (4) getragene Positionssensoren umfassen.

3. Arbeitsfahrzeug nach Anspruch 1 oder 2, wobei die Sensormittel Drehmomentsensoren umfassen.

4. Arbeitsfahrzeug nach Anspruch 3, wobei die Drehmomentsensormittel in die beweglichen Verbindungen (9, 17) integriert sind.

5. Arbeitsfahrzeug nach einem der vorstehenden Ansprüche, wobei das Arbeitsfahrzeug mit Signalisierungsmitteln versehen ist, wobei die Steuereinheit konfiguriert ist, um die Aktivierung der Signalisierungsmittel zum Abgeben eines Warnsignals zu steuern, wenn das erfasste Drehmoment größer als der vorbestimmte Schwellenwert ist.

6. Arbeitsfahrzeug nach Anspruch 5, wobei die Signalisierungsmittel Audio- und/oder Tonsignalisierungsmittel umfassen.

7. Verfahren zur Begrenzung des in einem Arbeitsfahrzeug wirkenden Drehmoments, das mit einer Hebeanordnung (1) versehen ist, nach einem der vorstehenden Ansprüche, wobei dieses Verfahren die folgenden Schritte umfasst:
• Erfassen eines Werts, der ein zwischen den Seitenarmen (4) und dem Traktorkörper (2) wirkendes Drehmoment darstellt;
• Vergleichen eines solchen erfassten Werts mit einem gespeicherten Wert in der Steuereinheit;
• Wenn ein solcher erfasster Wert in Bezug auf einen solchen gespeicherten Wert niedriger ist, werden keine Maßnahmen durchgeführt;
• Wenn ein solcher erfasster Wert in Bezug auf einen solchen gespeicherten Wert höher ist, werden Korrekturmaßnahmen durchgeführt.

8. Verfahren nach Anspruch 7, wobei die Korrekturmaßnahmen eine Positionsänderung der Seitenarme (4) umfassen können.

9. Verfahren nach Anspruch 7 oder 8, ferner umfassend einen Signalisierungsschritt, wobei, wenn ein solcher erfasster Wert in Bezug auf einen solchen gespeicherten Wert höher ist, Signalisierungsmittel aktiviert werden, um den Fahrer zu warnen.

## Revendications

1. Véhicule de travail comprenant un système de levage (1) pourvu :
- d'une paire de bras latéraux (4) définissant une partie de raccordement (4a) conçue pour permettre le raccordement du bras latéral (4) à un élément porté par le véhicule de travail, et une partie d'accouplement (4b) opposée à la partie de raccordement (4a) et conçue pour permettre un raccordement mobile du bras latéral (4) par rapport à une partie de corps (29) du véhicule de travail,
- de moyens d'actionnement (8) destinés à actionner chacun de ladite paire de bras latéraux (4) et comprenant une partie inférieure (8a) raccordée entre les parties de raccordement et d'accouplement (4a, 4b), et une partie supérieure (8b) raccordée à ladite partie de corps (2) ;
dans lequel ladite partie inférieure (8a) et ladite partie supérieure (8b) sont raccordées à l'élément respectif par l'intermédiaire de raccords mobiles (9, 17), lesdits moyens d'actionnement (8) étant conçus pour augmenter ou diminuer leur dimension afin de soulever ou d'abaisser ladite partie de raccordement (4a) par rapport au sol,
dans lequel ladite partie supérieure (8b) desdits moyens d'actionnement (8) et ladite partie d'accouplement (4b) desdits bras latéraux (4) sont toutes deux raccordées à un même élément de support (13) qui est porté par la partie corps (2),
ledit véhicule de travail (1) étant pourvu de moyens de capteur configurés pour détecter des paramètres de fonctionnement liés au couple agissant sur lesdits bras latéraux (4) par rapport à ladite partie de corps (2),
ledit véhicule de travail (1) étant pourvu d'une unité de commande configurée pour recevoir les données transmises par lesdits moyens de capteur et commander lesdits moyens d'actionnement (8) pour maintenir ledit couple agissant sur lesdits bras latéraux (4) par rapport à ladite partie de corps (2) en dessous d'une valeur seuil prédéterminée
**caractérisé en ce que**
l'élément de support (13) est un anneau 14 qui peut être reçu autour d'un support d'axe (3) par l'intermédiaire d'un raccord à fixation sélective.

2. Véhicule de travail selon la revendication 1, dans lequel lesdits moyens de capteur comprennent des capteurs de position portés par lesdits bras latéraux (4).

3. Véhicule de travail selon la revendication 1 ou 2, dans lequel lesdits moyens de capteur comprennent des capteurs de couple.

4. Véhicule de travail selon la revendication 3, dans lequel lesdits moyens de capteur de couple sont intégrés dans lesdits raccords mobiles (9, 17).

5. Véhicule de travail selon l'une quelconque desdites revendications précédentes, dans lequel ledit véhicule de travail est pourvu de moyens de signalisation, ladite unité de commande étant configurée pour commander l'activation desdits moyens de signalisation afin d'émettre un signal d'avertissement si ledit couple détecté est supérieur à ladite valeur seuil prédéterminée.

6. Véhicule de travail selon la revendication 5, dans lequel lesdits moyens de signalisation comprennent des moyens de signalisation audio et/ou sonore.

7. Procédé pour la limitation du couple agissant dans un véhicule de travail pourvu d'un ensemble de levage (1) selon l'une quelconque des revendications précédentes, ce procédé comprenant les étapes suivantes :
• détection d'une valeur représentant un couple agissant entre les bras latéraux (4) et le corps du tracteur (2) ;
• comparaison d'une telle valeur détectée à une valeur mémorisée dans ladite unité de commande ;
• si cette valeur détectée est inférieure à la valeur mémorisée, aucune action n'est effectuée ;
• si cette valeur détectée est supérieure à la valeur mémorisée, des actions correctives sont effectuées.

8. Procédé selon la revendication 7, dans lequel lesdites actions correctives peuvent comprendre une variation de position des bras latéraux (4).

9. Procédé selon la revendication 7 ou 8, comprenant en outre une étape de signalisation, dans lequel, si la valeur détectée est supérieure à la valeur mémorisée, les moyens de signalisation sont activés pour avertir le conducteur.
